# DEMANDE DE BREVET EUROPEEN

(11) **EP 0 726 054 A2**
(43) Date de publication de la demande: **14.08.1996**
(21) Numéro de dépôt: 96400128.3
(22) Date de dépôt: 19.01.1996
(51) Int. Cl.: A47J 31/60, A47J 31/057

(54) **Filtre à eau**

(30) Priorité: 31.01.1995 FR 9501132
(71) Demandeur: Robert Krups GmbH & Co. KG, 42719 Solingen (DE)
(72) Inventeur: Mehnert, Hans-Jürgen, D-42719 Solingen (DE); Hoffmann, Erich, D-51467 Bergisch Gladbach (DE); Pytlik, Dorothea, D-42719 Solingen (DE)
(74) Mandataire: Busquets, Jean-Pierre

(57) **Abrégé**

La présente invention concerne un filtre à eau destiné à être inséré dans un circuit d'eau de consommation.

Selon l'invention, le filtre à eau comporte un support 2 destiné à loger de façon amovible un ou plusieurs moyens filtrants 4 différents ayant chacun une propriété filtrante différente et adaptés à être montés soit indépendamment les uns des autres, soit associés dans une combinaison particulière de manière à réaliser une filtration de l'eau de consommation en fonction de sa composition.

## Description

La présente invention concerne un filtre à eau destiné à être inséré dans un circuit d'eau de consommation.

Les filtres à eau connus dans l'art antérieur utilisent soit des procédés chimiques, électrochimiques prédéterminés soit des procédés magnétiques. Dans les deux cas, ces filtres nécessitent des installations de construction complexe et onéreuse et prévues pour un seul type de traitement de l'eau de consommation. or la nature de l'eau de consommation dépend de sa composition qui varie en fonction de plusieurs facteurs spécifiques à chaque région tels que par exemple la nature du sol ou l'activité industrielle et agricole. Aussi, les filtres de l'art antérieur deviennent totalement inefficaces dans des régions où l'eau de consommation courante contient plusieurs types d'impuretés.

Le but de l'invention est de remédier à cet inconvénient en réalisant un filtre qui soit de conception simple et peu coûteuse doté de possibilités d'utilisation plus vastes, permettant d'éliminer une plus grande variété d'impuretés présentes dans l'eau à traiter et qui soit adapté à être utilisé efficacement dans plusieurs régions différentes.

Selon l'invention, le filtre à eau comporte un support destiné à loger de façon amovible un ou plusieurs moyens filtrants différents ayant chacun une propriété filtrante différente et adaptés à être montés soit indépendamment les uns des autres sur ledit support, soit associés dans une combinaison particulière de manière à réaliser une filtration de ladite eau de consommation en fonction de sa composition.

Grâce au filtre selon l'invention, le traitement de l'eau est effectué par un seul type de moyen filtrant dans le cas où l'eau à traiter contient un seul type d'impureté ou par plusieurs types de moyens filtrants judicieusement combinés dans le cas où ladite eau contient plusieurs types d'impuretés. En outre, le caractère modulable du filtre selon l'invention le rend apte à être utilisé dans plusieurs régions différentes et dans le cadre de plusieurs applications différentes aussi bien dans de petits appareils électroménagers que dans le circuit d'alimentation d'installations à caractère industriel ou de recherche scientifique nécessitant l'utilisation d'une eau traitée.

Selon une autre caractéristique de l'invention, chaque moyen filtrant présente une composition chimique particulière ayant une réaction spécifique adaptée à un traitement particulier de l'eau de consommation utilisée.

Ainsi, selon la composition de l'eau à traiter, l'utilisateur fixe dans ledit support un ou plusieurs moyens filtrants différents ayant chacun une composition chimique adaptée pour provoquer l'élimination d'un type particulier d'impuretés contenues dans l'eau à traiter.

D'autres caractéristiques et avantages de l'invention ressortiront d'ailleurs de la description qui va suivre, à titre d'exemple non limitatif, en référence aux dessins annexés dans lesquels:
- la figure 1 est une vue en perspective montrant un premier mode de réalisation d'un filtre à eau selon l'invention destiné à équiper une cafetière.
- la figure 2 est une vue en coupe verticale à plus petite échelle selon la ligne I-I de la figure 1 dans laquelle le filtre est inséré dans un réservoir d'eau d'une cafetière.
- la figure 3 est une vue en perspective montrant un deuxième mode de réalisation d'un filtre selon l'invention.

Le filtre de l'invention est destiné à être inséré dans un circuit d'eau de consommation, par exemple entre un robinet ou un réservoir et un circuit d'utilisation.

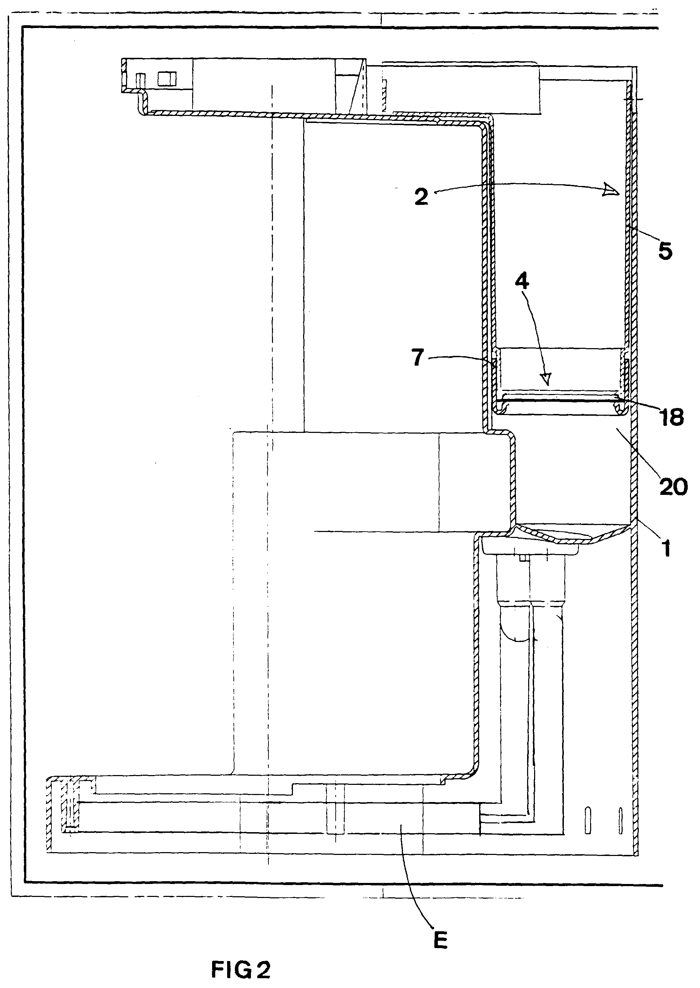

Dans l'application particulière illustrée sur la figure 2, le filtre à eau est inséré dans un circuit d'eau de consommation alimentant une cafetière comportant un réservoir d'eau 1 relié à un chauffe-eau E. Dans le cadre de cette application, ledit filtre est agencé en amont du chauffe-eau E.

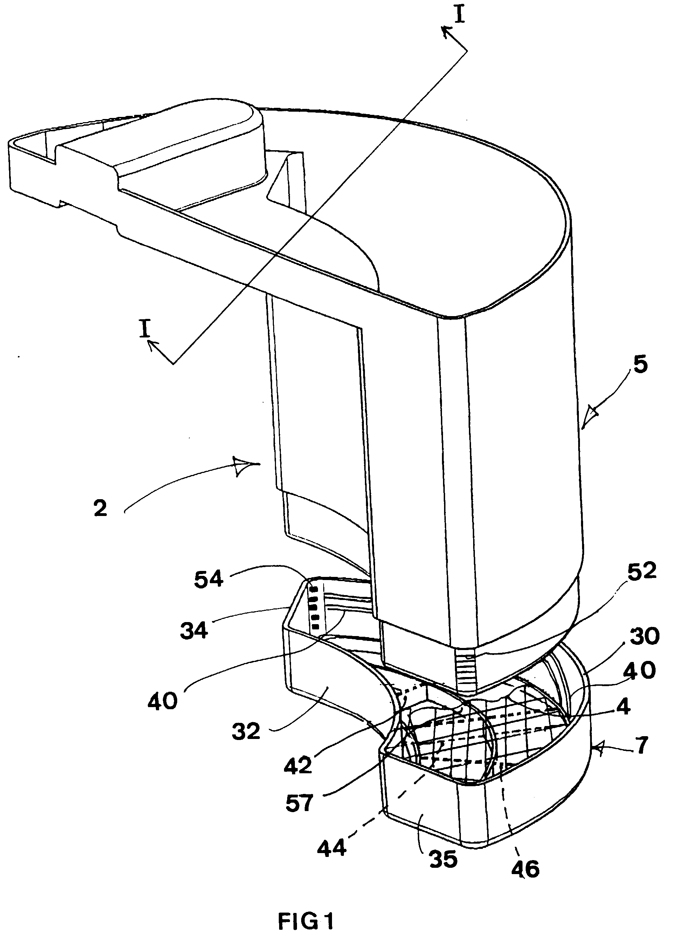

Selon l'invention, et comme on peut le voir sur les figure 1 à 3, le filtre à eau comporte un support 2 destiné à loger de façon amovible un ou plusieurs moyens filtrants 4 différents ayant chacun une propriété filtrante différente et adaptés à être montés soit indépendamment les uns des autres, soit associés dans une combinaison particulière de manière à réaliser une filtration de l'eau de consommation en fonction de sa composition.

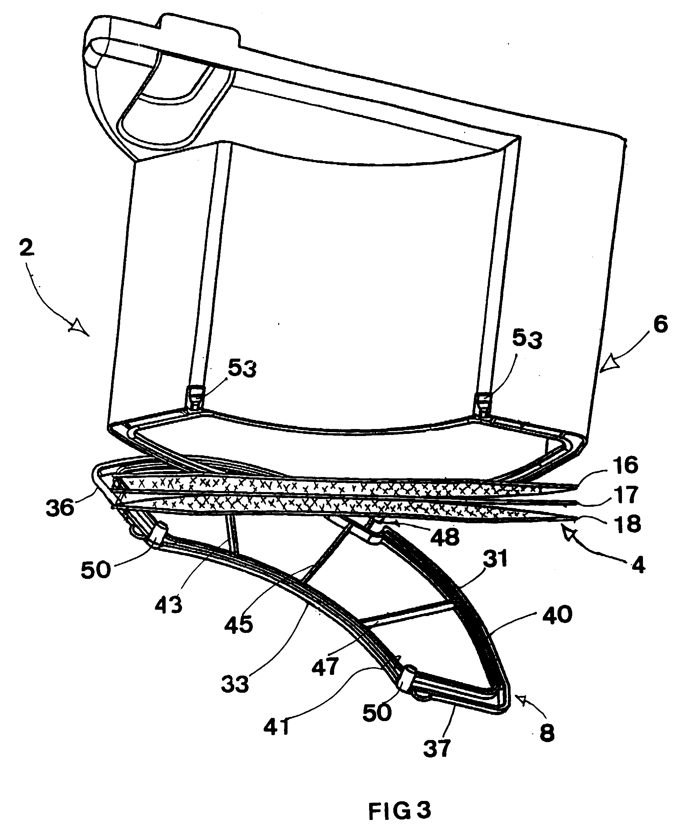

Comme on peut mieux le voir sur les figures 1 et 3, le support comporte un cadre formé de deux parties, soit une première partie (5;6) et une deuxième partie (7;8) assemblées l'une à l'autre par des moyens de serrage réglables de manière à permettre la retenue d'un moyen filtrant 4 aussi bien que la retenue d'un empilement de moyens filtrants 4. Comme on le voit mieux sur la figure 3, dans laquelle on a limité la représentation à trois moyens filtrants, chaque moyen filtrant 4 est constitué par une nappe (16,17,18) qui est agencée transversalement au flux du circuit d'eau d'alimentation. Avec une telle structure, l'utilisateur a la possibilité d'ajuster le traitement de l'eau de consommation en fonction des impuretés à éliminer en fixant sur ledit support 2 la nappe 16 ou 17 ou 18 ou la combinaison de nappes (16,17,18) adaptées à produire une filtration de l'eau utilisée en vue d'en éliminer, au cours de la même opération de filtration, les différents types d'impuretés.

Selon une caractéristique importante de l'invention, chaque moyen filtrant présente une composition chimique particulière ayant une réaction spécifique adaptée à un traitement particulier de l'eau de consommation utilisée. Bien entendu, un moyen filtrant peut être également du type mécanique, c'est à dire présenter une structure suffisamment fine pour retenir par exemple du tartre et des impuretés solides.

Ainsi, dans le cas où l'eau de consommation contient du calcaire ou des agents pesticides tels que des nitrates, une ou plusieurs des nappes filtrantes 4 seront constituées par des matériaux échangeurs d'ions. Par exemple pour le calcaire on utilisera un filtre "échangeur cationique" et pour les nitrates un filtre "échangeur anionique."

Dans le cas où l'eau de consommation contient des impuretés organiques telles que des chlorures, une ou plusieurs des nappes filtrantes 4 seront constituées par du charbon actif. Comme nous l'avons dit précédemment les différentes nappes filtrantes 4 peuvent être utilisées indépendamment les unes des autres ou associées dans une combinaison particulière lorsque l'eau à traiter contient plusieurs types d'impuretés nécessitant plusieurs traitements conjoints. Comme il est connu en soi, chaque nappe (16,17,18) comporte un indicateur de saturation, non représenté, permettant à l'utilisateur de changer de manière simple la ou les nappes filtrantes (16,17,18) lorsque celles-ci sont saturées. Dans une réalisation particulièrement intéressante de l'invention, chaque nappe est fabriquée dans un matériau non tissé et imputrescible et traité chimiquement pour posséder les caractéristiques chimiques recherchées.

Il est bien entendu que les traitements sus mentionnés ne sont nullement limitatifs dans la mesure où le filtre à eau selon l'invention peut comporter d'autres moyens filtrants ayant d'autres compositions chimiques et susceptibles d'avoir des formes différentes adaptées à l'environnement dans lequel le filtre est utilisé. Ce dernier peut, par exemple, comporter des cartouches contenant des substances filtrantes différentes et disposées de manière amovible dans une structure ayant une forme adaptée à l'environnement dans lequel ledit filtre est utilisé.

En se rapportant notamment à la figure 2, le support 2 présente la forme d'un corps creux dont l'enveloppe épouse en partie la forme du réservoir d'eau 1 de manière à permettre l'emboîtement du support 2, et dont le fond comporte les nappes filtrantes 16,17,18. Ledit support 2 est agencé dans le réservoir d'eau 1 à distance du fond de ce dernier de manière à ménager un réservoir intermédiaire 20 entre ledit fond et la nappe inférieure 18 montée dans le support 2. Le réservoir intermédiaire 20 est destiné à contenir l'eau filtrée qui s'écoule en aval du filtre et qui est ensuite envoyée vers le circuit d'utilisation à travers des conduits agencés dans le fond du réservoir intermédiaire 20. Selon une réalisation préférée de l'invention, les nappes (16,17,18) s'étendent pratiquement sur toute l'étendue du fond du support 2 et par conséquent sur toute l'étendue du réservoir 1.

Comme on le voit sur les figures 1 et 3, la première partie (5;6) ainsi que la deuxième partie (7;8) du support 2 des nappes filtrantes (16,17,18) sont formées par une structure arquée de forme générale trapézoïdale. Ladite deuxième partie (7;8) présente un premier côté (30;31) en forme d'arc de cercle et un deuxième côté (32;33) parallèle au premier côté (30;31) et de longueur plus petite que celle de ce dernier. Les extrémités respectives du premier côté (30;31) et du deuxième côté (32;33) sont reliées respectivement par deux bordures latérales (34,36) et (35, 37) symétriques. Dans la réalisation illustrée à la figure 2 et à la figure 3 lesdits premier côté (30;31) et deuxième côté (32;33) comportent sur leurs faces internes respectives des rainures (40;41) destinées à loger les bords des nappes filtrantes (16,17,18) . Afin d'éviter le déboîtement desdites nappes (16,17,18) sous l'action de l'eau qui les traverse, Le cadre comporte au moins trois nervures transversales (42,44,46) et (43,45,47) agencées dans la deuxième partie (7,8) et reliant le premier côté (30;31) et le deuxième côté (32;33). Ces nervures servent de trame d'appui audites nappes filtrantes 16,17,18 et/ou nappes supplémentaires mécaniques.

Selon un premier mode de réalisation illustré sur la figure 1, lesdits moyens de serrage sont formés par un dispositif à translation comportant sur la première partie 5 une série de crans 52 et sur la deuxième partie 7, en regard desdits crans 52, une série d'ergots élastique 54. Selon ce mode de réalisation, afin de renforcer la trame d'appui de nappes filtrantes (16,17,18), les nervures transversales (42,44,46) sont reliées par un arceau 57 parallèle au premier côté 31 et au deuxième côté 33.

Selon un deuxième mode de réalisation illustré sur la figure 3 les moyens de serrages permettant la retenue des nappes sont formés par un dispositif à articulation comportant sur le premier côté 31 du cadre une charnière 48 et sur le deuxième côté 33 au moins une agrafe 50 à accrochage élastique. Dans la réalisation illustrée, les agrafes sont au nombre de deux et viennent s'accrocher sur des crans 53 portés par la partie 6.

Ce dispositif permet d'une part un verrouillage sûre des moyens filtrants 4 dans le support 2 et d'autre part une manipulation simple permettant le remplacement et/ou le nettoyage des nappes filtrantes (16,17,18).

Grâce au caractère modulable du filtre selon l'invention, la filtration de l'eau de consommation peut être effectuée "à la carte" en fonction des impuretés à éliminer et des législations relatives à l'hygiène dans les différents pays. En outre le filtre selon l'invention permet d'adapter l'eau de consommation courante au goût du consommateur, ce qui est très important pour la réalisation d'un bon café.

## Revendications

1. Filtre à eau destiné à être inséré dans un circuit d'eau de consommation,
**caractérisé en ce qu'**il comporte un support (2) destiné à loger de façon amovible un ou plusieurs moyens filtrants (4) différents ayant chacun une propriété filtrante différente et adaptés à être montés soit indépendamment les uns des autres sur ledit support, soit associés dans une combinaison particulière de manière à réaliser une filtration de l'eau de consommation en fonction de sa composition.

2. Filtre à eau selon la revendication 1,
**caractérisé en ce que** chaque moyen filtrant (4) présente une composition chimique particulière produisant une réaction spécifique adaptée à un traitement particulier de l'eau de consommation utilisée.

3. Filtre à eau selon la revendication 1 ou la revendication 2,
**caractérisé en ce qu'**un des moyens filtrants (4) est constitué par du charbon actif.

4. Filtre à eau selon la revendication 1 ou la revendication 2,
**caractérisé en ce qu'**un des moyens filtrants (4) est constitué par un matériau échangeur d'ions.

5. Filtre à eau selon la revendication 4,
**caractérisé en ce que** chaque moyen filtrant (4) est constitué par une nappe (16,17,18) qui est agencée transversalement au flux du circuit d'eau d'alimentation et le support (2) comporte un cadre formé de deux parties, soit une première partie (5;6) et une deuxième partie (7;8) assemblées l'une à l'autre par des moyens de serrage réglables de manière à permettre la retenue d'un moyen filtrant (4) aussi bien que la retenue d'un empilement de moyens filtrant(4).

6. filtre à eau selon la revendication 5,
**caractérisé en ce que** les moyens de serrage sont formés par un dispositif à articulation comportant sur un côté du cadre une charnière (48) et sur le côté opposé au moins une agrafe à accrochage élastique (50).

7. filtre à eau selon la revendication 5,
**caractérisé en ce que** les moyens de serrage sont formés par un dispositif à translation comportant sur l'une des parties une série de crans (52) et sur l'autre partie, en regard desdits crans (52), une série d'ergots élastiques (54).

8. Filtre à eau selon l'une quelconque des revendications précédentes, destiné à être inséré dans un circuit d'eau de consommation alimentant une cafetière comportant un réservoir d'eau (1) relié à un chauffe-eau E,
**caractérisé en ce qu'**il est agencé en amont dudit chauffe-eau E.

9. Filtre à eau selon la revendication 8,
**caractérisé en ce que** le support (2) est agencé dans le réservoir d'eau (1) à distance du fond dudit réservoir de manière à ménager un réservoir intermédiaire (20) entre ledit fond et le moyen filtrant inférieur (18) montée dans le support (2).

10. Filtre à eau selon la revendication 5 et les revendications 8 ou 9,
**caractérisé en ce que** le support (2) présente la forme d'un corps creux dont l'enveloppe épouse en partie la forme du réservoir d'eau (1) de manière à permettre l'emboîtement du support (2), et dont le fond comporte les nappes filtrantes (16,17,18), lesdites nappes (16,17,18) s'étendant pratiquement sur toute l'étendue du fond du réservoir (1).
